# EUROPEAN PATENT APPLICATION

(11) **EP 4 610 500 A1**
(43) Date of publication of application: **03.09.2025**
(21) Application number: 25158438.9
(22) Date of filing: 17.02.2025
(51) Int. Cl.: F16B 2/18, F16B 21/02, B65G 39/12, F16B 21/16, F16B 5/06, F16B 35/06

(54) **AXLE LOCK FOR COUPLING A ROLLER TO A FRAME**

(30) Priority: 29.02.2024 US 202463559746 P; 11.02.2025 US 202519050984
(71) Applicant: Intelligrated Headquarters LLC, Mason, OH 45040 (US)
(72) Inventor: GEORGE, Brightson, Charlotte, 28202 (US)
(74) Representative: Haseltine Lake Kempner LLP

(57) **Abstract**

An axle lock for coupling a roller to a frame is disclosed. The axle lock comprises a locking plate having a first locking plate aperture and a second locking plate aperture. Further, the first locking plate aperture allows an axle of the roller to be positioned within a cam handle. A bolt extending through the second locking plate aperture, the bolt having a first portion having a plurality of threads, a second portion having a pin aperture. Further, a pin is positioned within the cam aperture and the pin aperture, and a nut. Further, the locking plate is positioned between the nut and the cam handle. Further, the nut is configured to pass through a frame aperture of the frame. Further, pivoting the cam handle on the pin axis locks the locking plate to the frame when the frame is positioned between the nut and the locking plate.

## Description

### CROSS-REFERENCE TO RELATED APPLICATIONS

The present applications claims priority to and the benefit of U.S. Provisional Application No. 63/559,746, filed February 29, 2024, the contents of which are hereby incorporated by reference in its entirety.

### TECHNOLOGICAL FIELD

An example embodiment relates generally to locking mechanism, and more particularly, to an axle lock for coupling a conveyor roller to a frame.

### BACKGROUND

Rollers or conveyor rollers are widely used components in various industrial applications. The rollers are employed for providing support and mobility to various conveyor systems and other moving elements. Typically, the rollers are constructed with a cylindrical shaped body that is encased around an axle. The axle of the rollers allows integration of the rollers with conveyor frames or side rails. The rollers are required to be locked with the conveyor frames via conventional axle locks. The conventional axle locks are bolted onto the conveyor frames. To install the conventional axle locks onto the conveyor frame, the installer has to hold a first portion of the axle lock that is positioned on a first side of the conveyor frame while simultaneously manipulating a second portion of the axle lock that is positioned on an opposite, second side of the conveyor frame, which may be difficult.

Applicant has identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an exemplary embodiment, an axle lock for coupling a roller to a frame is disclosed. The axle lock comprises a locking plate having a first locking plate aperture and a second locking plate aperture. Further, the first locking plate aperture is configured to allow an axle of the roller to be positioned within the locking plate. Further, a cam handle having a cam aperture and a bolt extending through the second locking plate aperture, where the bolt defining a bolt axis. Further, the bolt defining a first portion having a plurality of threads, and a second portion having a pin aperture. Further, a pin defining a pin axis where the pin is positioned within the cam aperture of the cam handle and the pin aperture of the bolt. Further, a nut coupled to the first portion of the bolt. Further, the locking plate is positioned between the nut and the cam handle. Further, the nut is configured to pass through a frame aperture of the frame. Further, pivoting the cam handle on the pin axis locks the locking plate to the frame when the frame is positioned between the nut and the locking plate.

In some embodiments, the first locking plate aperture and the second locking plate aperture are fabricated over the locking plate. Further, the first locking plate aperture and the second locking plate aperture having a predefined radius. In some embodiments, the locking plate is a first locking plate and the axle lock further comprises a second locking plate that has the first locking plate aperture and the second locking plate aperture, respectively, each of the first locking plate and the second locking plate has the first locking plate aperture and the second locking plate aperture that are positioned linearly over each other with a predefined distance between the first locking plate aperture and the second locking plate aperture. Further, the first locking plate and the second locking plate are parallelly coupled such that each of the first locking plate aperture and the second locking plate aperture on the first locking plate and the second locking plate superimpose.

In some embodiments, rotating the cam handle on the bolt axis locks the locking plate to the frame when the frame is positioned between the nut and the locking plate. Further, rotating the cam handle on the bolt axis facilitates the plurality of threads to rotate inside the nut that allows tightening of the nut with the bolt.

In some embodiments, a non-threaded shank is fabricated in between the plurality of threads at the first portion of the bolt. Further, a plurality of balls are positioned within the nut. Further, rotating the cam handle on the bolt axis pushes the plurality of balls in a radially outward direction relative to the nut, thereby locking the nut with the frame. Further, the nut corresponds to a hex nut, and the nut comprises a plurality of nut apertures that are each configured to allow a corresponding ball to be positioned at least partially within.

In some embodiments, at least one washer sandwiched between the cam handle and the locking plate, and configured to distribute load of the bolt over the locking plate. Further, the at least one washer is tapered at an angle such that pivoting the cam handle on the pin axis locks rotational direction movement of the cam handle.

In an exemplary embodiment, a method is disclosed. The method comprises steps of positioning a locking plate over an axle of a roller via a first locking plate aperture of the locking plate. The method further comprises steps of extending a bolt through a second locking plate aperture of the locking plate. Further, the bolt defining a bolt axis, and comprises a first portion having a plurality of threads and a second portion having a pin aperture. The method further comprises steps of positioning a pin within a cam aperture of a cam handle and the pin aperture of the bolt. Further, the pin defining a pin axis. The method further comprises coupling a nut to the first portion of the bolt. Further, the locking plate is positioned between the nut and the cam handle. Furthermore, the nut is configured to pass through a frame aperture of a frame. Further, pivoting the cam handle on the pin axis locks the locking plate to the frame when the frame is positioned between the nut and the locking plate.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates an exploded view of an axle lock for coupling a roller to a frame in accordance with an example embodiment the present disclosure;
FIG. 2 illustrates a side view of the axle lock in accordance with the example embodiment of the present disclosure; and
FIGS. 3A-3E illustrate a sequential process of installation of the axle lock over an axle of the roller for coupling the roller to the frame in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

Embodiments of the present disclosure will be described more fully hereinafter with reference to the accompanying drawings in which like numerals represent like elements throughout the several figures, and in which example embodiments are shown. Embodiments of the present disclosure may, however, be embodied in alternative forms and should not be construed as being limited to the embodiments set forth herein. The examples set forth herein are non-limiting examples and are merely examples among other possible examples.

The present disclosure discloses an axle lock for coupling a conveyor roller to a frame. The present disclosure provides various embodiments for locking an axle of a roller. Embodiments may be configured to install and remove the roller from the frame by rotating a cam handle. Embodiments may be configured to lock movement of the cam handle by using a bolt and a nut.

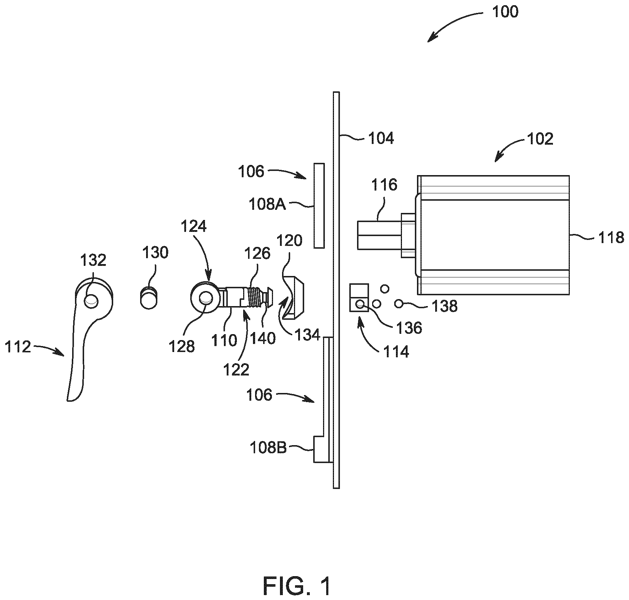

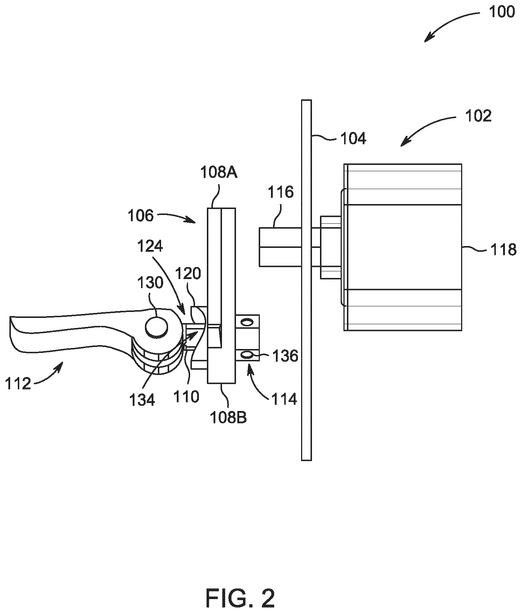

FIG. 1 illustrates an exploded view of an axle lock 100 for coupling a roller 102 to a frame 104, in accordance with an example embodiment of the present disclosure. FIG. 2 illustrates a side view of the axle lock 100, in accordance with the example of the present disclosure.

In some embodiments, the axle lock 100 may comprise a locking plate 106. The locking plate 106 may comprise a first locking plate 108A and a second locking plate 108B, and a first locking plate aperture (not shown). The axle lock 100 may comprise a bolt 110, a cam handle 112, and a nut 114. In some embodiments, the locking plate 106 may be configured to be mounted over an axle 116 of the roller 102 via the first locking plate aperture. The first locking plate aperture may be a hole fabricated through a thickness of the locking plate 106, which may include the first locking plate 108A and the second locking plate 108B. The first locking plate aperture may allow the axle 116 of the roller 102 to pass through the locking plate 106. Further, the roller 102 may be employed in various fields of applications. In an exemplary embodiment, the roller 102 may be integrated within a conveyor system to move one or more items or packages over the conveyor system. In some embodiments, the roller 102 may be installed with the frame 104 of the conveyor system.

In some embodiments, the roller 102 may comprise the axle 116 and an outer shell 118. In some embodiments, the outer shell 118 may configured to be in direct contact with the one or more packages that are carried by the roller 102. In some embodiments, the axle 116 of the roller 102 may be configured to allow coupling of the roller 102 with the frame 104 via the first locking plate aperture. Further, the axle 116 may be integrated with the frame 104 through a frame aperture (not shown) that extends through the frame 104. In some embodiments, the locking plate 106 may be configured to be positioned parallel to the frame 104. In some embodiments, the locking plate 106 may be crafted with a planar surface (not shown). Further, the planar surface of the locking plate 106 may allow proper positioning and alignment of the locking plate 106 with the frame 104. In some embodiments, the locking plate 106 may be crafted with a material such as, but is not limited to, steel, aluminum, alloys, or any other material known in the art. In some embodiments, the locking plate 106 may define a length L, width W, and thickness T.

In some embodiments, the locking plate 106 may comprise the first locking plate 108A and the second locking plate 108B. In some embodiments, the first locking plate 108A and the second locking plate 108B may be crafted with the first locking plate aperture (not shown). Further, the first locking plate 108A and the second locking plate 108B may be crafted with a second locking plate aperture (not shown). In some embodiments, each of the first locking plate aperture and the second locking plate aperture may be positioned linearly over each other (e.g., aligned vertically) with a predefined distance. In some embodiments, the predefined distance between the first locking plate aperture and the second locking plate aperture may define a length L. In some embodiments, the first locking plate 108A and the second locking plate 108B may be parallelly coupled such that each of the first locking plate aperture on the first locking plate 108A and the first locking plate aperture on the second locking plate 108B superimpose (e.g., align horizontally).

In some embodiments, the first locking plate aperture may be configured to receive the axle 116 during installation of the roller 102 with the frame 104. In some embodiments, the first locking plate aperture may be crafted with a shape that may be selected from a group of shapes such as, but are not limited to, circular shape, square shape, hexagonal shape, or any other shape known in the art. Further, the first locking plate aperture may have a predefined radius. In some embodiments, the locking plate 106 may be configured to enable a secured positioning of the frame 104 between the locking plate 106 and the roller 102.

In some embodiments, the bolt 110 may be engaged with the locking plate 106 via at least one washer 120. In some embodiments, the bolt 110 may comprise a first portion 122 and a second portion 124. Further, the first portion 122 may be fabricated with a plurality of threads 126. In some embodiments, the bolt 110 may define a bolt axis (not shown). In some embodiments, the plurality of threads 126 may be configured to allow fastening of the bolt 110 through the second locking plate aperture, upon rotation of the cam handle 112 on the bolt axis.

In some embodiments, the second portion 124 may be crafted with a pin aperture 128. In some embodiments, the pin aperture 128 may be configured to receive a pin 130 that may be engaged within the pin aperture 128. Further, the pin 130 may define a pin axis (not shown). The pin axis may extend orthogonally from the bolt axis. Further, the pin aperture 128 may be crafted with a shape that may comprise at least one of square shape, circular shape, rectangular shape, or any other shape known in the art. In some embodiments, the pin 130 may be configured to enable coupling of the cam handle 112 with the pin aperture 128 of the bolt 110. In some embodiments, the cam handle 112 may comprise a cam aperture 132. Further, the cam aperture 132 may be configured to enable coupling of the cam handle 112 with the pin 130. In some embodiments, the cam handle 112 may be pivoted by a user around the pin axis.

In some embodiments, the locking plate 106 may be monolithic with at least one washer 120. The at least one washer 120 may be sandwiched between the cam handle 112 and the locking plate 106. In some embodiments, the at least one washer 120 may be configured to distribute load of the bolt 110 over the locking plate 106 to allow independent rotational movement of the bolt 110. Further, the at least one washer 120 may be tapered at an angle, as illustrated by 134. In some embodiments, the at least one washer 120 may be configured to interlock the cam handle 112 when the cam handle 112 is pivoted over the pin axis to prevent further movement of the cam handle 112.

In some embodiments, the axle lock 100 may further comprise the nut 114. In some embodiments, the nut 114 may be positioned parallel to the second locking plate aperture machined on the locking plate (e.g., the second locking plate apertures of the first locking plate 108A and the second locking plate 108B). In some embodiments, the nut 114 may be coupled with the first portion 122 of the bolt 110 via the plurality of threads 126. In some embodiments, the nut 114 may be fastened with the first portion 122 of the bolt 110 via the second locking plate aperture.

In some embodiments, the second locking plate aperture may be crafted with a shape that may be selected from a group of shapes such as, but are not limited to, circular shape, square shape, hexagonal shape, or any other shape known in the art. Further, the second locking plate aperture may have a predefined radius. In some embodiments, the second locking plate aperture may be crafted on the first locking plate 108A and the second locking plate 108B of the locking plate 106. Further, the first locking plate 108A and the second locking plate 108B may be parallelly placed such that the second locking plate aperture may superimpose with the frame aperture crafted on the frame 104 (e.g., the second locking plate aperture may be aligned horizontally with the frame aperture). In some embodiments, the rotations of the cam handle 112 over the pin axis facilitates in tightening of the bolt 110 with the nut 114.

In some embodiments, the nut 114 may correspond to a hex nut. Further, the nut 114 may comprise a plurality of nut apertures 136. In some embodiments, the plurality of nut apertures 136 of the nut 114 may be machined to accommodate a plurality of balls 138. In some embodiments, the plurality of nut apertures 136 may be configured to allow a corresponding ball 138 to be positioned within the nut 114. In some embodiments, the bolt 110 may be configured to push the plurality of balls 138 in a radially outwards direction during the rotation of the cam handle 112 on the bolt axis. In some embodiments, the bolt 110 may comprise a non-threaded shank 140. Further, the non-threaded shank 140 may be configured to push the plurality of balls 138 in the radially outwards direction from the nut 114, thereby locking the nut 114 with the frame 104.

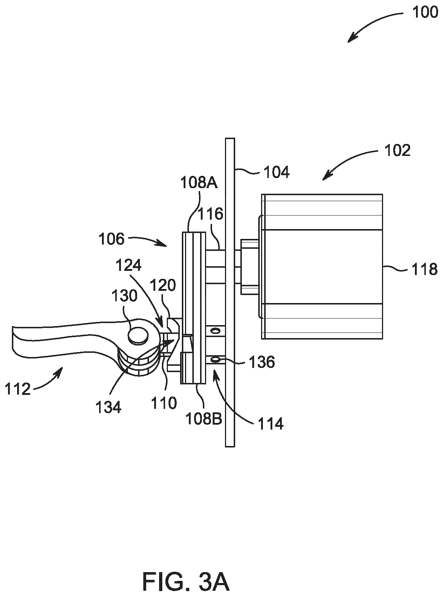

FIGS. 3A-3E illustrate a sequential process of installation of the axle lock 100 over the axle 116 of the roller 102 for coupling the roller 102 to the frame 104, in accordance with the example embodiment of the present disclosure. FIGS. 3A-3E are described in conjunction with FIGS. 1-2.

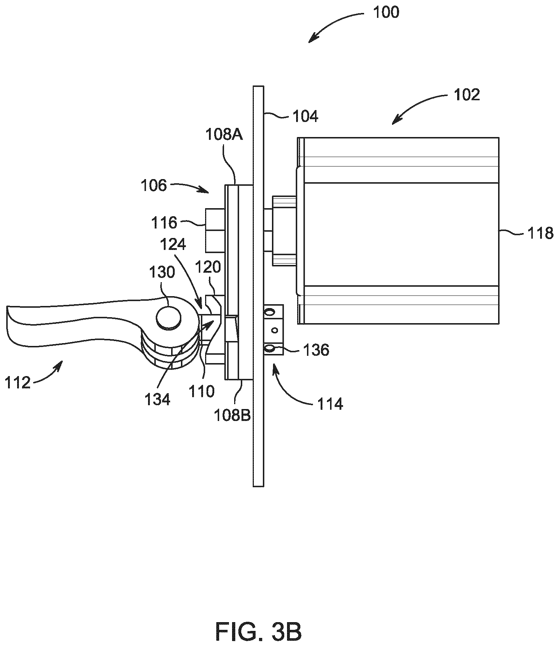

In some embodiments, the locking plate 106 may be configured to mount over the axle 116 of the roller 102. In some embodiments, the axle 116 of the roller 102 may rest on the frame aperture fabricated with the frame 104. In some embodiments, the first locking plate 108A and the second locking plate 108B of the locking plate 106 may be crafted with the first locking plate aperture. In some embodiments, the first locking plate aperture may allow coupling of the locking plate 106 with the axle 116 of the roller 102 as illustrated in FIG. 3A. Further, the first locking plate 108A and the second locking plate 108B of the locking plate 106 may be crafted with the second locking plate aperture vertically placed below the first locking plate aperture. The second locking plate aperture may be configured to allow the nut 114 pass through the locking plate 106 as illustrated in FIG. 3B.

In some embodiments, the bolt 110 may be attached with the locking plate 106 via the at least one washer 120. In some embodiments, the bolt 110 may comprise the first portion 122 and the second portion 124. In some embodiments, the first portion 122 may be crafted with the plurality of threads 126. In some embodiments, the bolt 110 may be configured to extend through the second locking plate aperture and couple to the nut 114. Further, the bolt 110 may be configured to define the bolt axis.

In some embodiments, the second portion 124 of the bolt 110 may be constructed with the pin aperture 128. Further, the pin aperture 128 may be configured to accommodate the pin 130 through a machined process. In some embodiments, the pin 130 may define the pin axis. In some embodiments, the pin 130 may be configured to couple the cam handle 112 with the second portion 124 of the bolt 110.

In some embodiments, the at least one washer 120 may be sandwiched between the bolt 110 and the locking plate 106. In some embodiments, the at least one washer 120 may be configured to distribute load of the bolt 110 over the locking plate 106. In some embodiments, the at least one washer 120 may be crafted with a hole. In some embodiments, the radius of the at least one washer 120 may be selected in a view of enable proper movement of the bolt 110 through the at least one washer 120.

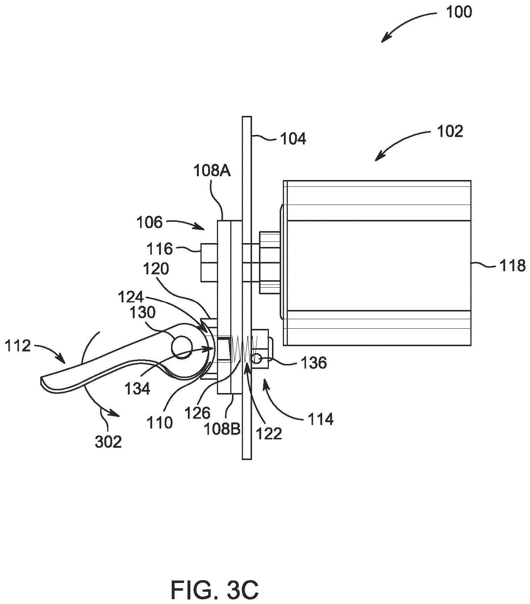

Further, as illustrated in FIG. 3C, the cam handle 112 may be configured to rotate in either clockwise rotational direction or in anticlockwise rotational direction around the bolt axis, as illustrated by an arrow 302. In some embodiments, the cam handle 112 may be configured to enable the user to provide movement to the cam handle 112 in either the clockwise rotational direction or in the anticlockwise rotational direction around the bolt axis, which may allow fastening of the bolt 110 through the second locking plate aperture. Further, the cam handle 112 may be crafted with a shape that may be selected from a group of shapes such as, but are not limited to, an elliptical shape, parabolic shape, sinusoidal shape, or any other shape known in the art.

In some embodiments, the nut 114 may be coupled with the first portion 122 of the bolt 110. In some embodiments, the first portion 122 of the bolt 110 may be crafted with the plurality of threads 126. Further, the fastening of the bolt 110 through the second locking plate aperture may facilitate the plurality of threads 126 to fasten inside the nut 114. In some embodiments, the fastening of the plurality of threads 126 inside the nut 114 may result in tightening of the nut 114 with the bolt 110 as illustrated in FIG. 3C.

Further, the bolt 110 may comprise the non-threaded shank 140 as illustrated in FIGS. 1 and 2. The non-threaded shank 140 may be positioned between the plurality of threads 126 and the pin aperture 128. In some embodiments, the rotational movement of the bolt 110 facilitates a sequential movement of the non-threaded shank 140 inside the nut 114. In some embodiments, the nut 114 may comprise the plurality of nut apertures 136.

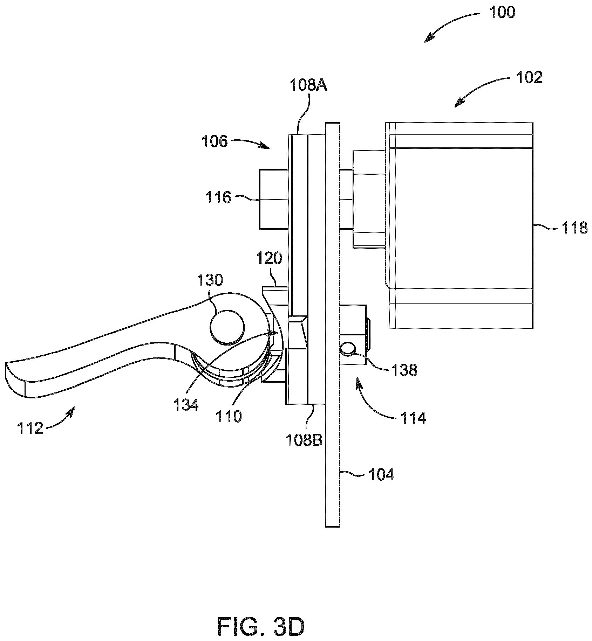

In some embodiments, the plurality of balls 138 may be positioned within the plurality of nut apertures 136. Further, the movement of the cam handle 112 over the pin axis facilitates movement of the non-threaded shank 140 inside the nut 114. Further, the non-threaded shank 140 may be configured to push the plurality of balls 138 in the radially outwards direction from the nut 114 as illustrated in FIG. 3D. In some embodiments, the movement of the plurality of balls 138 in the radially outwards direction relative to the nut 114 may facilitate locking of the nut 114 with the frame 104. For example, the movement of the plurality of balls 138 in the radially outwards direction may prevent the nut 114 from being able to pass through the frame aperture on the frame 104.

In some embodiments, the first portion 122 of the bolt 110 may be crafted with a circular groove. In some embodiments, the circular groove may be configured to enable snap-fitting of the plurality of balls 138 after successful fastening of the bolt 110 inside the nut 114. Further, the circular groove may be crafted with one or more elliptical boundaries to enable snap-fitting of the plurality of balls 138 inside the circular groove thereby locking the bolt 110 inside the nut 114.

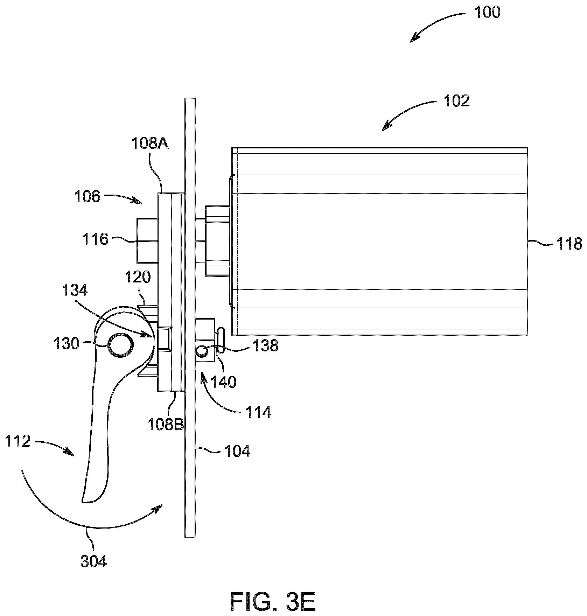

In some embodiments, the at least one washer 120 may be tapered at the angle, as illustrated by 134. In some embodiments, the cam handle 112 may be pivoted on the pin axis, as illustrated by an arrow 304, to lock the locking plate 106 to the frame 104. In some embodiments, the at least one washer 120 may be configured to interlock with the cam handle 112 upon pivoting of the cam handle 112. In some embodiments, the pivoting of the cam handle 112 facilitates locking of rotational direction of the cam handle 112 as illustrated in FIG. 3E. Further, the pivoting of the cam handle 112 facilitates in locking of the locking plate 106 with the frame 104 when the frame 104 is positioned between the nut 114 and the locking plate 106.

In an example embodiment, a method is disclosed. The method comprises one or more operations that may be facilitate locking of the axle 116 of the roller 102 with the frame 104. In some embodiments, the locking plate 106 may be positioned over the axle 116 of the roller 102 by the first locking plate aperture of the locking plate 106. For example, the locking plate 106 is engaged with the axle 116 of an idler roller that is further integrated within a conveyor system. Further, the locking plate 106 is machined with the first locking plate aperture that facilitates engaging of the locking plate 106 with the axle 116 of the idler roller.

In some embodiments, the bolt 110 may be extended through the second locking aperture of the locking plate 106. Further, the bolt 110 may be configured to define the bolt axis. In some embodiments, the bolt 110 may comprise the first portion 122 and the second portion 124. Further, the first portion 122 may comprise the plurality of threads 126 and the second portion 124 may comprise the pin aperture 128. For example, the locking plate 104 is machined with a second locking plate aperture that allows extending of a bolt 110 through the second locking plate aperture of the locking plate 108. Further the bolt 110 comprises a first portion 122 and a second portion 124. The first portion 122 of the bolt 110 is crafted with a plurality of threads 126 and the second portion 124 of the bolt 110 is crafted with a pin aperture 128.

In some embodiments, the pin 130 may be positioned within the cam aperture 132 of the cam handle 112 and the pin aperture 128 of the bolt 110. Further, the pin 130 may define the pin axis. For example, the pin aperture 128 of the bolt 110 is positioned with the pin 130 upon passing through the cam aperture 132 of a cam handle 112 to secure the cam handle 112 with the bolt 110. Further, the pin 130 defines a pin axis.

In some embodiments, the nut 114 may be coupled with the first portion 122 of the bolt 110. Further, the locking plate 106 may be positioned between the nut 114 and the cam handle 112. Furthermore, the nut 114 may be configured to pass through the frame aperture of the frame 104. Further, the cam handle 112 may be pivoted on the pin axis to lock the locking plate 106 to the frame 104 when the frame 104 may be positioned between the nut 114 and the locking plate 106.

Embodiments may be configured to provide a secured locking of the axle 116 of the roller 102 with the frame 104. Embodiments may ensure alignment of the roller 102 with the frame 104 by providing the secured locking of the axle 116 with the frame 104. Embodiments may ensure proper fitting of the axle 116 with the frame 104 by means of the bolt 110 and the nut 114. Embodiments may ensure proper locking of the axle 116 by interlocking the cam handle 112 with the at least one washer 120. Embodiments may allow easy installation of the roller 102 with the frame 104. Embodiments may avoid any manual involvement during installation of the roller 102. Embodiments may ensure proper alignment and fitting of the roller 102 with the frame 104. Embodiments may provide replacement for conventional bolted lock mechanism. Embodiments may enhance durability of the roller 102.

Embodiments may allow installation of the axle lock 100 with access to only one side of the frame 104 of the conveyor. For example, and as discussed, the axle lock 100 may be installed on the frame 104 by passing the nut 114 through the frame aperture. Once the nut 114 is on the opposite side of the frame 104, the cam handle 112 may be rotated on the bolt axis and/or pivoted on the pin axis, which may move the balls 138 radially outward, which may prevent the nut 114 from passing through the frame aperture. Preventing the nut 114 from passing through the frame aperture, along with tightening the cam handle 112, may lock the axle lock 100 onto the frame 104. Notably, conventional axle locks often require access to both sides of the frame of the conveyor by requiring an installer to hold a portion of the axle lock that is positioned on a side of the frame while simultaneously tightening a nut that is on an opposite side of the frame, which may be difficult. As such, the axle lock 100 of the present disclosure may be easier to install than conventional axle locks.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An axle lock for coupling a roller to a frame, the axle lock comprising:
a locking plate having a first locking plate aperture and a second locking plate aperture, wherein the first locking plate aperture is configured to allow an axle of the roller to be positioned within the locking plate;
a cam handle having a cam aperture;
a bolt extending through the second locking plate aperture, the bolt defining a bolt axis, the bolt having:
a first portion having a plurality of threads; and
a second portion having a pin aperture;
a pin defining a pin axis, wherein the pin is positioned within the cam aperture of the cam handle and the pin aperture of the bolt; and
a nut coupled to the first portion of the bolt,
wherein the locking plate is positioned between the nut and the cam handle,
wherein the nut is configured to pass through a frame aperture of the frame, and
wherein pivoting the cam handle on the pin axis locks the locking plate to the frame when the frame is positioned between the nut and the locking plate.

2. The axle lock of claim 1, wherein the first locking plate aperture and the second locking plate aperture are fabricated over the locking plate, wherein the first locking plate aperture and the second locking plate aperture having a predefined radius.

3. The axle lock of claim 1, wherein the locking plate is a first locking plate and the axle lock further comprises a second locking plate that has a first locking plate aperture and the second locking plate aperture, respectively, each of the first locking plate and the second locking plate has the first locking plate aperture and the second locking plate aperture that are positioned linearly over each other with a predefined distance between the first locking plate aperture and the second locking plate aperture.

4. The axle lock of claim 3, wherein the first locking plate and the second locking plate are parallelly coupled such that each of the first locking plate aperture and the second locking plate aperture on the first locking plate and the second locking plate superimpose.

5. The axle lock of claim 1, wherein rotating the cam handle on the bolt axis locks the locking plate to the frame when the frame is positioned between the nut and the locking plate.

6. The axle lock of claim 5, wherein rotating the cam handle on the bolt axis facilitates the plurality of threads to rotate inside the nut that allows tightening of the nut with the bolt.

7. The axle lock of claim 1, wherein a non-threaded shank is fabricated in between the plurality of threads at the first portion of the bolt.

8. The axle lock of claim 7, wherein a plurality of balls are positioned within the nut, wherein rotating the cam handle on the bolt axis pushes the plurality of balls in a radially outward direction relative to the nut, thereby locking the nut with the frame.

9. The axle lock of claim 8, wherein the nut corresponds to a hex nut, and the nut comprises a plurality of nut apertures that are each configured to allow a corresponding ball to be positioned at least partially within.

10. The axle lock of claim 5, further comprising at least one washer sandwiched between the cam handle and the locking plate, and configured to distribute load of the bolt over the locking plate, and wherein the at least one washer is tapered at an angle such that pivoting the cam handle on the pin axis locks rotational direction movement of the cam handle.

11. A method comprising:
positioning a locking plate over an axle of a roller via a first locking plate aperture of the locking plate;
extending a bolt through a second locking plate aperture of the locking plate, wherein the bolt defining a bolt axis, and comprises a first portion having a plurality of threads and a second portion having a pin aperture;
positioning a pin within a cam aperture of a cam handle and the pin aperture of the bolt, wherein the pin defining a pin axis; and
coupling a nut to the first portion of the bolt,
wherein the locking plate is positioned between the nut and the cam handle,
wherein the nut is configured to pass through a frame aperture of a frame, and
wherein pivoting the cam handle on the pin axis locks the locking plate to the frame when the frame is positioned between the nut and the locking plate.

12. The method of claim 11, wherein the first locking plate aperture and the second locking plate aperture are fabricated over the locking plate, wherein the first locking plate aperture and the second locking plate aperture having a predefined radius.

13. The method of claim 11, wherein the locking plate is a first locking plate and the axle lock further comprises a second locking plate that has the first locking plate aperture and the second locking plate aperture, respectively, each of the first locking plate and the second locking plate has the first locking plate aperture and the second locking plate aperture that are positioned linearly over each other with a predefined distance between the first locking plate aperture and the second locking plate aperture.

14. The method of claim 13, wherein the first locking plate and the second locking plate are parallelly coupled such that each of the first locking plate aperture and the second locking plate aperture on the first locking plate and the second locking plate superimpose.

15. The method of claim 11, wherein rotating the cam handle on a bolt axis locks the locking plate to the frame when the frame is positioned between the nut and the locking plate, where rotating the cam handle on the bolt axis facilitates the plurality of threads to rotate inside the nut that allows tightening of the nut with the bolt.
